# EUROPEAN PATENT APPLICATION

(11) **EP 3 171 354 A1**
(43) Date of publication of application: **24.05.2017**
(21) Application number: 15822547.4
(22) Date of filing: 09.07.2015
(51) Int. Cl.: G09B 5/06, G09B 19/00, G09B 19/06

(54) **LANGUAGE LEARNING SYSTEM UTILIZING COMPONENT UNIT, MORE SEGMENTED THAN PHONEME, OR VARIOUS GAMES**

(30) Priority: 18.07.2014 KR 20140091033; 21.08.2014 KR 20140108845
(71) Applicant: Kim, Sung-kwang, Seoul 150-805 (KR)
(72) Inventor: Kim, Sung-kwang, Seoul 150-805 (KR)
(74) Representative: Cabinet Chaillot
(86) International application number: PCT/KR2015/007154
(87) International publication number: WO 2016/010306

(57) **Abstract**

The present invention relates to a language learning system utilizing a component unit more segmented than a phoneme or utilizing various games. The language learning system utilizes several characters as a unit more segmented than a phoneme with respect to morphology learning, and a phoneme as a unit more segmented than a syllable with respect to pronunciation learning. Users can learn a language from the segmented unit to a larger unit such as a syllable, a word and a sentence through the learning system. In addition, the language learning system provides various games to users intending to learn a language by allowing the users to notice positive effects rather than negative effects provided by a game. The games assist users in constructing a phoneme, a syllable, a word, a sentence and the like and assists in connecting a character to a pronunciation, meaning and the like. Additionally, the learning system provides learning material to the users and also provides a function and a guide for enabling the users to generate the learning material and construct a curriculum by themselves so as to induce an active and autonomous attitude of the users to language learning. Also, the learning system presents "a basic pronunciation", "a quick pronunciation" and "a motion picture of a pronouncing mouth shape", and the utilization of "a phonetic character described in the native tongue of a user" instead of a phonetic symbol as a visual representation of a pronunciation so as to assist the users in learning language pronunciation. Furthermore, the learning system provides an image and a motion picture relating to a learning material, basic grammar information, word order information, and literal translation and liberal translation information to the users so as to assist the users in the semantic learning of a character and in the pronunciation of a language, and momentarily and repeatedly exposes the information with a time interval so as to improve the users' memories. Moreover, the learning system provides, to the users, a game ranking order and a result represented in a change transition graph so as to provide feedback on the users' learning ability.

## Description

### [Technical Field]

The present invention relates to a language (including both a mother tongue and a foreign language) learning system which utilizes a component unit more segmented than a phoneme. To describe it more specifically, the learning system is a system which utilizes several basic characters in the phoneme as a minimum unit of learning instead of the entire phonemes, with respect to the character morphology learning of a language. For example, in the case of 'Hangeul' (which refers to writing characters of Korean language), the phoneme is a minimum unit in constructing the Hangeul morphology. Basically, a phoneme consists of 14 consonants and 10 vowels. In an extended sense, a phoneme includes double consonants, which are a group of two consonants and double vowels, which are a group of two or three vowels; this is a method where all different phonemes are made via rotation and combination of these basic characters; the thus-made phonemes are combined to make a syllable (in the case of Hangeul, it consists of an initial sound consonant, a middle sound vowel, and a final sound consonant (or supporting consonant)); the syllables are combined to make a word; and words are combined to construct a sentence. Additionally, the learning system utilizes a phoneme as a minimum unit instead of a syllable with respect to the learning of language pronunciation. That is, this is a method for pronouncing a syllable by minimizing the pronunciation interval for each of the phonemes, as in constructing a syllable by combining phonemes. The learning system is a system which mainly utilizes various games in language learning. These games are those which construct words and sentences, and connect the characters to pronunciations and meanings. The learning system not only provides a learning material to users (which refers to users who use this learning system and these people include not only the normal people but also foreign people, people having problems in language learning, and people with hearing impairment, described hereinafter as "users") but also a function enabling the users to produce a learning material and construct a learning process (*i.e*., curriculum) for themselves. For the improvement of users in language learning ability, this learning system provides the users with "a basic pronunciation (a pronunciation heard when the users slowly make a sound of a language)" which the users intend to learn and characters thereof; "basic pronunciation characters (which refer to characters of a visual expression with respect to the basic pronunciation of a language)" described in the users' "native tongue (which refers to a language used by the users)"; a quick pronunciation (a pronunciation heard when the users quickly make a sound of a language)" and characters thereof; "quick pronunciation characters (which refer to characters of a visual expression with respect to the quick pronunciation of a language)" described in the users' "native tongue (which refers to a language used by the users)"; an animation of a pronunciation organ (*e.g.,* lips, teeth, a tongue, and a throat); "a motion picture of a pronouncing mouth shape (a moving mouth shape motion picture when users pronouncing a language)"; a motion picture of a sign language; "users' language characters (which refer to characters of users' native tongue showing the same meaning as a learning material of a language which the users intend to learn); an image, a motion picture, basic grammar information, word order information, literal translation and liberal translation information, related to a learning material, *etc.* These data are exposed to users momentarily and repeatedly in the learning system with a time interval. Additionally, this learning system is a system that shows the result of language learning by the users via visual schematization.

### [Background Art]

The Cia-Cia tribe, a racial minority in Indonesia which had been troubled in their communication due to the absence of their own characters, had adopted to introduce 'Hangeul' as their trial writing characters for their people in 2009. Additionally, several states in the Solomon Islands introduced 'Hangeul' as their writing characters in 2012. To keep pace with the trend, an object of the learning system, to which the present invention is applied, is to help the people in the world and those who have a deficiency in language learning ability (*e.g*., people having deficiencies in language learning, people with hearing impairment, *etc.*) to learn their native tongues and foreign languages with much ease and interest.

There are many existing systems for language learning (teaching aids; a collective term for various recorded materials or playing instruments, computer programs, *etc.,* utilized in learning) that are already developed. The existing language learning systems have a phoneme or a concept larger than a phoneme (*i.e*., a syllable, a word, a sentence, *etc.*) as a basic unit for learning. There may be not many difficulties in learning by utilizing the existing language learning systems for those who are frequently exposed to an environment to languages they intend to learn, those who have memory ability and language learning ability equal to or higher than those of people in the same age group, or those who have an ability to distinguish character morphology and pronunciation-distinguishing ability of a language equal to or higher than those of people in the same age group. If these people are considered to be users that belong to a general range, the users who require a more thoughtful consideration with respect to language learning (those users to which the present learning system considers as a main subject, and described as "main user" hereinafter). Examples of the main user may include foreigners who are exposed to an environment of languages they intend to learn at low frequency (*i.e*., those who do not have the corresponding language as their native tongues, children in multi-cultural families or their parents of foreign origin); those who have ability to distinguish character morphology and pronunciation distinguishing ability of a language equal to or less than those of people in the same age group; those who are unable to connect character morphology and pronunciation (*i.e*., those who are unable to tell whether the pronunciation of a character, which was shown to them immediately before hearing the pronunciation, is correct or not for themselves; those who have memory and language learning ability equal to or less than those of people in the same age group (*e.g.,* people having problems in language learning); and those who have hearing problems (*e.g*., hearing-impaired people). These people may have many difficulties in learning language by utilizing the existing learning systems. Above all, these people may have a burden with respect to the number of entire phonemes. Accordingly, it is necessary to analyze the character morphology and pronunciation of a language into a unit with a less number for the users to more easily remember and distinguish, and apply them to learning.

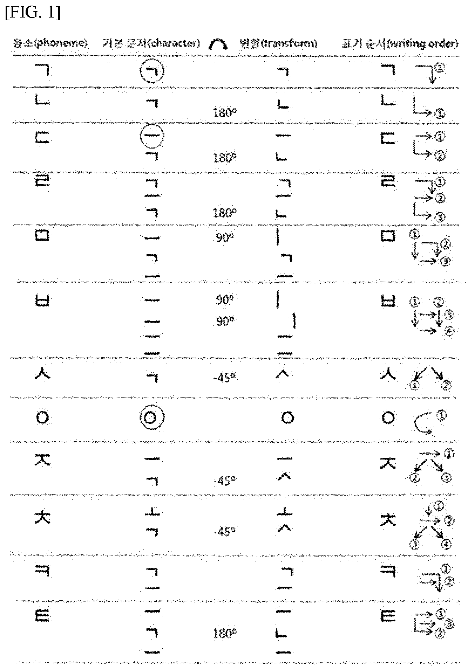

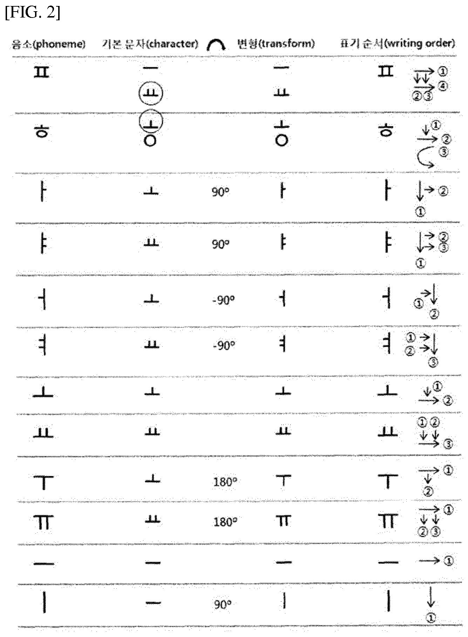

In consideration of the above, as can be seen in FIGS. 1 and 2, the learning system, to which the present invention is applied, first suggests several basic characters in a phoneme as a minimum unit of learning with respect to character morphology learning of a language. The suggested characters can be made into all the other phonemes via rotation and combination. The thus-made phonemes can be combined to make a syllable; syllables can be made into a word; and words can be made into a sentence. As such, users can proceed with the character morphology learning of a language while gradually extending the range. In the case of 'Hangeul', there is a prior art in which the principle of constructing 'Hangeul' was applied among the 'Hangeul' learning systems. For example, in the case of US 8,475,170B2, the invention suggests a method of utilizing six basic phonemes for the learning of 'Hangeul'. For the utilization of the invention as a learning tool, the lengths such as the horizontal length and vertical length of a tool become important factors in its preparation. In contrast, in the learning system to which the present invention is applied, each length of the basic phoneme character is not a factor for consideration at all. In particular, considering the current trend that various calligraphic styles (fonts) with respect to the characters of a language are developed and used, any learning tool which enables a sufficient distinction of morphology of a language will suffice. Additionally, although it is a matter of a difference in viewpoints, the invention of US 8,475,170B2 is mainly focused on the morphology construction of a language rather than the writing order of a language. For example, in the case of 'Hangeul', the present invention combines two "U" made by rotating " 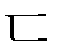 " so as to make a phoneme " 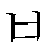 ". In contrast, in the learning systems to which the present invention is applied, phonemes are made in consideration of the writing order of 'Hangeul'. The principle of the writing order of 'Hangeul' with respect to the writing direction and order is prescribed such that the horizontal stroke is made "from left to right" and the vertical stroke is made from "top to bottom". As can be seen in FIGS. 1 and 2, in fact, the phoneme " 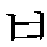 " is written in a sequential order: ① the vertical line ("1") from left top to bottom, ② the vertical line ("1") from right top to bottom, ③ the horizontal line ("-") from left center to right center, and ④ the horizontal line ("-") from left bottom to right bottom.

In the case of 'Hangeul', a single character is always expressed in a single pronunciation. It is different from English alphabet, where a single character can be expressed in one or more pronunciations (*e.g*., the English alphabet "c" is expressed as "k" in "cat" and expressed as "s" in "center").

Considering the above, the learning system to which the present invention is applied suggests a phoneme as a minimum unit instead of a syllable with respect to a pronunciation learning of a language. The pronunciation of a syllable can be expressed by almost simultaneously pronouncing the phonemes, combined as in constructing a syllable by combination of phonemes, by minimizing each of the pronunciation interval. For example, in the case of 'Hangeul', the pronunciation of a syllable, " 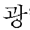 ", is expressed by combining the pronunciation of the initial sound " 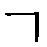 ", the pronunciation of the middle sound " 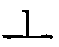 ", the pronunciation of the middle sound " 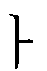 ", and the pronunciation of the final sound " 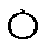 ". This method helps a user to pronounce a syllable unknown to him via sufficient deduction if the pronunciation for each of the phonemes is known. For example, the pronunciation for the syllable " 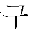 " and the pronunciation for the syllable " 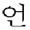 " are known, " 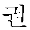 " and " 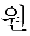 " can be pronounced. That is, " 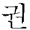 " and " 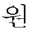 " can be pronounced (*i.e*., is readable) via deduction even though the pronunciations of " 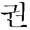 " and " 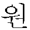 " were not learned. As such, users can learn with respect to the pronunciation of a language by gradually expanding the range.

The existing language learning systems are in the form of a multiple choice for problem solving (*i.e*., a catechetical method), or in the form of a repeatedly exposing information (*i.e*., a method of repeated mechanical rote), or in the form of explanation by enumerating a series of information (*i.e*., an explanatory method), or in the form of information delivery by a dialogue in a situation (*i.e*., a conversational method), *etc.* Regardless of the method, all the methods required to memorize a language learning material. As such, users may have a burden or easily lose an interest in the language learning. To solve the problem, a language learning method, which can enhance the sense for a language (especially, a foreign language) much in advance by allowing users to learn a language (especially, a foreign language) through native speakers from their childhood, has recently been highlighted. The method may be effective but it also has a disadvantage in that it significantly increases the cost instead.

Due to the development of computers, internet, and games, many people ranging from children to aged people have become enjoying games to escape from boring daily life. This is a phenomenon confirming that games can provide a rest or interest in daily life. Among the effects that games provide, there are negative effects that make the users to be addicted thereto and increase their violence in one aspect, but it should not be ignored that games also have a positive effect of increasing the gamers' concentration and inducing an interest on the other hand. However, on which aspect the effect will be strengthened may be determined depending on how the constituting components of games and the method thereof are established. The learning system to which the present invention is applied suggests that the positive effect of games be grafted to a foreign language learning to keep pace with social necessity and phenomenon. The games that the learning system provides to its users enables to be concentrated on the simple music, construction of words or sentences, construction of characters and pronunciations, and meaning of a language, instead of being concentrated on the violent and sensational screen images or thrilling sound effects. A representative organization where a language education occurs may be a general school. Currently, the language education in general schools is mostly carried out in such a form that a teacher who prepared a learning material provides it to students and the students learn what they are provided in a passive manner. It is already well-known that such a passive g method of approach in a language (especially, a foreign language) can result in a burden in a real communication with a native speaker of the language and make them to avoid the communication, even after a long period of a language (especially, a foreign language) education. In order to solve the above problem, the learning system to which the present invention is applied suggests a method for inducing an autonomous and active attitude of the users (*e.g*., students). The learning system not only provides a learning material to the users but also provides a function and a guide to generate the learning material and construct a curriculum for themselves.

For a better understanding of a language and a writing, learning of the pronunciation of a language is important. The learning system not only provides the users with a basic pronunciation which the users intend to learn, a quick pronunciation, an animation of a pronunciation organ, a motion picture of a pronouncing mouth shape, a motion picture of a sign language, but also provides "something which is a bit easier" instead of a pronunciation signal as a visual expression with respect to the pronunciation. It is a pronunciation character described in a native tongue of the users. For example, as an expression of a basic pronunciation for "bottom (an English expression)" having a meaning of " 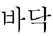 (a Korean expression)", a Korean style pronunciation character of " 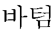 (a Korean expression)" is used as an expression of a basic pronunciation for "bottom (an English expression)" having a meaning of " 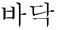 (a Korean expression)", instead of "[bat∂m]". Additionally, when "bottom" is pronounced rapidly in sequence along with other words, it is heard as " 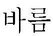 (a Korean expression)", and in particular, this character is used as an expression for quick pronunciation. As such, an easy approach of users to the pronunciation of a language is induced. When users learn a language, it is necessary for a learning system to help the users to easily understand the pronunciation of a language, the meaning of words and a sentences and to acknowledge the difference between the sentence structure of their native tongue and that of the language they intend to learn. This is because the main object of the language learning is to make the users understand the meaning thereof. To solve the problem, the learning system to which the present invention is applied provides users with an image and a motion picture relating to a learning material, basic grammar information, word order information, and literal translation and liberal translation information to the users. The learning system helps the users to easily remember learning materials by exposing these information and the information pronunciation-related information mentioned above momentarily and repeatedly with a time interval.

Additionally, it is necessary to easily examine where there was any improvement in the users' learning ability, any deficiency in any part, and any improvement of the users' learning ability compared to that of other people in the same group. This is because these are important factors to provide motivation with respect to learning. The learning system to which the present invention applies provides the users with a game ranking and visual feedback information by a graph of a change in transition.

### [Summary of the Invention]

Not only general users but also the users who require more thoughtful considerations with respect to a language learning (*i.e*., main users of the present learning system) may have many difficulties in learning a language using a phoneme or a concept larger than a phoneme (*i.e*., a syllable, a word, a sentence, *etc.*) as a basic unit for learning by using the existing language learning system. The language learning system, to which the present invention is applied, suggests that a language be learned by first allowing to learn in a learning unit with more segmented but a less number of learning unit than the learning unit used in the existing language learning system followed by a learning to a larger unit. When users complete the learning of the morphology with segmented and a less number of characters via the language learning system, they can construct a more complex and larger number of words and sentences. Additionally, the users complete the learning of the pronunciation of phonemes, they can sufficiently express the pronunciations of words and sentences they are not aware of by deduction.

When the users learn a language, it is necessary to allow them to have an interest without a burden although there may be a little tension. This is because the continuous and steady efforts by the users are the basic important factors for the improvement of learning ability. The learning system to which the present invention is applied utilizes various games to enable the users maintaining such a state during language learning. These games can induce users' concentration and interest in language learning.

The users are required to have a more autonomous and active learning attitude in learning a language (especially a foreign language in addition to their native language). In particular, foreign languages are not familiar to users in their native language and the users are not frequently exposed to an environment of using the foreign language in their daily lives, and thus the users can easily forget even what they have learned. The language learning system, to which the present invention is applied, not only provides a learning material to the users but also focuses on enabling them the production of learning materials for themselves and construction of a curriculum thereby inducing their active participation in the learning.

In users' language learning, it is necessary that information on various pronunciation sounds be provided to the users for easy accepting and learning of the pronunciation of a language and also easier methods other than the pronunciation signals as a visual expression with respect to pronunciation be used. To this end, the language learning system, to which the present invention is applied, focuses on the expression of pronunciations into the native tongue of the users. That is, an easy approach to the learning of pronunciation is induced via expression in the native tongue of the users, instead of difficult pronunciation signals.

Additionally, when the users learn a language, it is necessary to make the users easily figure out the pronunciations, words, and sentence structures of the language. This is because the main object of the language learning lies in figuring out meanings. To this end, the language learning system, to which the present invention is applied, focuses on the provision of various information such as an image and a motion picture relating to a learning material, word order information, basic grammar information, and literal translation and liberal translation information. In addition to these information, the momentary and repeated exposure of the pronunciation-related information mentioned above with a time interval can help the users to remember.

Additionally, it is necessary to easily examine where there was any improvement in the users' language learning ability, any deficiency in any part, and the level of the users' learning ability compared to that of other people in the learning group. This is because these can serve as the standard from the aspect of motivation regarding the learning. To this end, the learning system to which the present invention is applied focuses on the provision of visual feedback information. By doing so, it enables the users to understand the change in learning ability at a look and provide a motivation to prepare for the next goal for themselves.

### [Brief Description of Drawings]

FIGS. 1 and 2 show charts illustrating a writing order of a language (in the case of 'Hangeul') and a method of constructing a character morphology of a language (in the case of 'Hangeul') suggested by a learning system to which the present invention is applied.
FIG. 3 shows a screen image of a system which illustrates how to rotate and combine several basic characters to make different phonemes in the construction of character morphology of a language (in the case of 'Hangeul').
FIG. 4 shows a screen image of a system which illustrates pronunciation characters and an animation of a pronunciation organ while expressing the pronunciation of a language (in the case of 'Hangeul').
FIG. 5 shows a screen image of an exemplary game which illustrates the process of constructing morphology of phonemes (in the case of 'Hangeul') and the process of constructing syllables combining the phonemes.
FIG. 6 shows a screen image of a fishing game which is utilized in a language learning (in the case of English).
FIG. 7 shows a screen image of a system in which users (in the case of Korean users) can directly produce a language learning material (in the case of English).
FIG. 8 shows a screen image of a system in which users can directly construct a language learning curriculum (in the case of 'Hangeul').
FIG. 9 shows a screen image of a system which illustrates a basic pronunciation of a language which the users intend to learn and characters thereof, basic pronunciation characters described in their native tongue, a quick pronunciation and characters thereof, quick pronunciation characters described in their native tongue, a motion picture of a pronouncing mouth shape, a motion picture of a sign language, users' language characters, an image and a motion picture relating to a learning material, an explanation, and ef basic grammar information, *etc.*
FIG. 10 shows a screen image of a system which illustrates a difference between a sentence structure of a language which the users intend to learn and a sentence structure of the users' native tongue, and literal translation and liberal translation information.
FIG. 11 shows a screen image of a system which schematically illustrates the feedback on a game result.

### [Best Mode]

The learning system, to which the present invention is applied, utilizes the segmentation of a learning unit in a manner different from the existing language learning system. The underlying reason therein is to enable the users, which include normal people and those who require more thoughtful considerations with respect to a language learning (*i.e*., main users of the present learning system), for easier learning of a language. For these users, it is necessary to proceed with the learning by starting from the segmented unit and gradually expanding the range of the learning.

For example, in the case of 'Hangeul', as shown in FIGS. 1 and 2, all phonemes can be constructed to be suitable for the writing order by rotation and combination of several basic characters. Accordingly, the starting point of a language learning is to learn the morphology, pronunciation, *etc.,* of the basic characters.

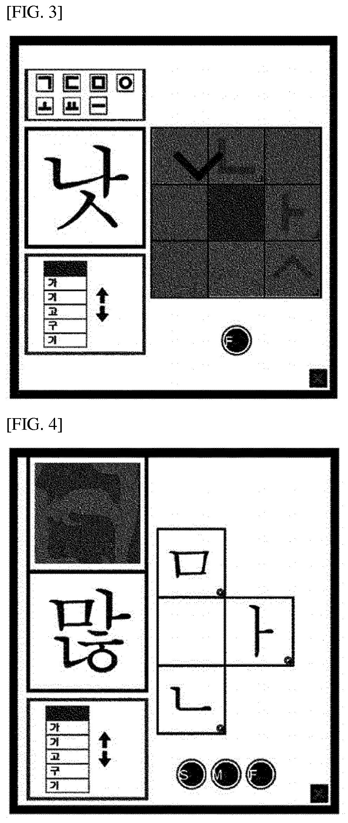

Referring to FIG. 3, the users can figure out how the basic characters mentioned above are rotated and combined to produce a phoneme while learning the morphology of the characters. A list of syllables for learning is shown on the left lower part of the screen. If a user selects one in each list, the shape of the corresponding syllable is disassembled into a phoneme unit and indicated in the center of the screen. When the thus-disassembled phonemes are selected, the basic characters are rotated and combined to make the corresponding phoneme suitable for the writing order; for example, as shown in FIG. 3, when a syllable ' 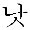 ' is selected, the phonemes of " 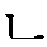 ", " 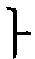 ", and " 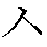 " are indicated in the center of the screen. In particular, when the " 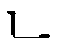 " phoneme is selected, an animation in which the basic character " 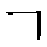 " is rotated 180 degrees clockwise to make " 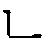 " is indicated. When the " 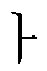 " phoneme is selected, an animation in which the basic character " 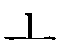 " is rotated 90 degrees clockwise to make " 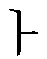 " is indicated. When the " 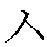 " phoneme is selected, an animation in which the basic character " 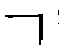 " is rotated 315 (or -45) degrees clockwise to make " 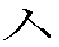 " is indicated: the " 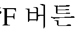 " at the bottom sequentially carries out all such animation processes. The user can naturally learn all the other phonemes through the learning of several basic characters.

Referring to FIG. 4, the pronunciation characters of a language and the animation of a pronunciation organ are shown when pronouncing the language. In particular, to describe the "pronunciation character" in more detail, it refers to a shape of a syllable being heard at the time of pronunciation, not the shape of the syllable actually written; the syllable " 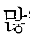 " is pronounced as " 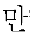 ". The pronunciation character is " 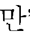 ". Hereinafter, it is described as "pronunciation character"; a list of syllables for learning is shown on the left lower part of the screen. If a user selects one in each list, the pronounced shape of the corresponding syllable that is not the written shape of the corresponding syllable is disassembled into a phoneme unit and indicated in the center of the screen image. When the thus-disassembled phonemes are selected, the animation of the pronunciation organ being changed at the time of pronouncing the corresponding phonemes is indicated in the upper part of the screen and the pronunciation is heard; for example, when the " 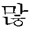 " syllable is disassembled into a phoneme unit of a shape being heard (" 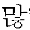 ") at the time of pronunciation, it may be disassembled into " 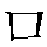 ", " 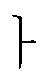 ", " 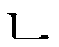 ", and " 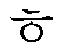 ". When it is disassembled into a phoneme unit of a shape being written (" 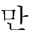 "), it may be disassembled into " 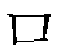 ", " 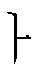 ", and " 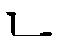 ". In particular, the pronunciation character " 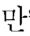 " is used in the learning of pronunciation. Among the phoneme disassembled into the shapes being heard at the time of pronunciation, when the " 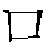 " phoneme is selected, the animation of the pronunciation organ with respect to the " 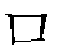 " is indicated in the upper part and the pronunciation for the " 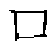 " can be heard. For himself or with the assistance of an advisor, the user can practice to pronounce according to the animation of the pronunciation organ for each phoneme, can receive a feedback regarding the error thereof, to make a similar pronunciation to the corresponding pronunciation " 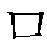 ". As such, users can learn the pronunciation of a language; a practice button is present in the lower part of the screen. "S button" pronounces each of the phonemes one by one in "slow pronunciation" with a regular interval. "M button" pronounces each of the phonemes in "middle pronunciation" with a shorter interval. "F button" pronounces each of the phonemes in "real pronunciation" thus shortening the interval of pronunciation. Accordingly, it is heard as if it were a pronunciation of a single syllable. To describe in more detail, with regard to the pronunciation of the " 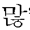 " syllable, when the "S button" is selected the pronunciations of " 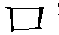 ", " 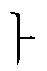 ", and " 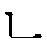 " phonemes can be heard sequentially at intervals of 1 second. When the "M button" is selected, the pronunciations of " 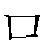 ", " 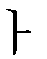 ", and " 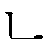 " phonemes can be heard sequentially at intervals of 0.3 second. When the "F button" is selected, the pronunciations of " 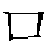 ", " 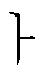 ", and " 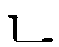 " phonemes can be heard almost simultaneously and thus the pronunciation is expressed as if the pronunciation of " 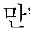 " were pronounced at once. This confirms that each phoneme has a pronunciation and the pronunciation of the combined corresponding syllable can be expressed by expediting the pronunciation by shortening the interval of pronunciation of these phonemes. The users can pronounce even those syllables, which they have not learned through the pronunciation learning of phonemes, via sufficient deduction. These methods can minimize the number of contents to memorize at the initial stage of learning with respect to the morphology or pronunciation especially in people with deficiency in language learning ability or those who have poor memory ability, thereby enabling them to get to the learning with a less burden on the learning and memory.

The language learning system, to which the present invention is applied, utilizes various games that can induce users' concentration and interest, not by simple mechanical rote, in a language learning.

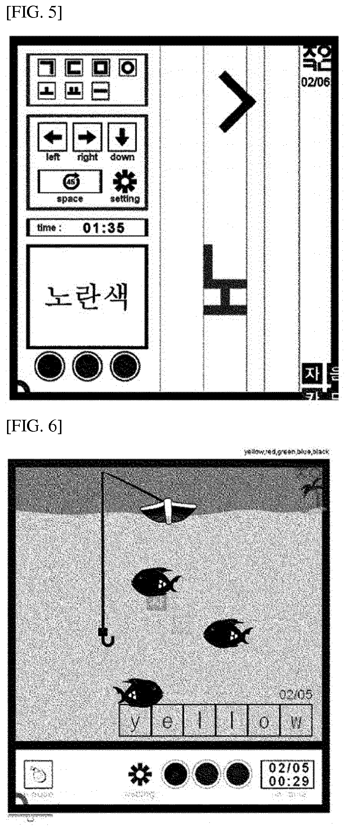

For examples, in the case of 'Hangeul', as shown in FIG. 5, the process of constructing phoneme morphology and the process of constructing syllables combining the phonemes are illustrated using "htetrism" game such as "tetris game". Once the game starts, the words of the language to learn (" 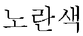 " in FIG. 5) are indicated on the left lower part of the screen, and among them, the frame which constructed the image of the first syllable (" 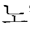 " in FIG. 5) is indicated in the middle lower part of the screen. At the same time, the basic character (" 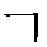 " in FIG. 5), which can make the initial phoneme (" 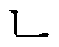 " in FIG. 5) of the corresponding syllable, drops from the upper center of the screen to the lower part thereof in a constant rate (a meaning of shooting). A user performs the project of manipulating the rotation degree and location of the dropping characters to correctly fit into each part of the syllable frame. As such, the user can learn as to how basic characters are transformed to make a phoneme and how thus-made phonemes are sequentially combined to a certain location and construct a syllable. During the progress of a game, the background music can be heard and the basic pronunciation and the quick pronunciation of the first word to learn can be heard repeatedly. An image or a motion picture of a sign language that helps to understand the meaning of a word may be indicated as necessary. As such, the user can focus his attention on the shape, pronunciation, and semantic learning of the first word. Once the "frame fitting" project with regard to the initial phoneme (" 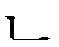 " in FIG. 5) is succeeded (a meaning of hitting), the basic character " 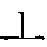 ", which can make the middle phoneme (" 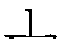 " in FIG. 5), which is the next phoneme of the syllable, drops from the upper center of the screen to the lower part thereof in a constant rate (a meaning of shooting). If failed, the project on the same phoneme (" 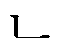 " in FIG. 5) is performed again (a meaning of shooting). In this manner, once the project of the "frame fitting" project of all the phonemes combined with regard to the first syllable (" 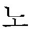 " in FIG. 5) is completed, the first cycle is finished. Then, the "frame fitting" game for the next syllable (" 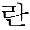 " in FIG. 5) is automatically proceeded. As such, once the "frame fitting" project with regard to the first word (" 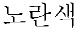 " in FIG. 5) is completed, the project performance with regard to the next word to learn proceeds continuously. Once the project performances with regard to all the words to learn are completed, the hitting ratio, which is a scaled score of the actual hitting counts with respect to the "frame fitting" counts (shooting counts), and the running time are recorded and utilized as a data for checking the learning ability of a user. FIG. 5 shows a game called "htetrism". The "htetrism" game is a game which shows the process of constructing phoneme morphology via rotation and combination of basic characters and the process of constructing the syllable combining the phonemes, and the game can induce the user's concentration and interest. The user can improve the ability to distinguish with regard to the phoneme shapes being constructed by basic characters, the ability of constructing syllables, and the ability to distinguish pronunciations connected to words.

Additionally, for example, in the case of English, the learning system helps to improve the ability to distinguish pronunciations of a user by utilizing a game of the fishing method in language learning, as shown in FIG. 6. Once a game starts, the language material to learn ("yellow" in FIG. 6) is indicated at the right lower part of the screen and fish, in which words (or sentence structures) are indicated, appear here and there scattered inside the sea in a halted state. On the surface of the sea, a fishing boat appears in a state where a fishing pole is laid down thereon. A fishing hook for catching fish is hung at the end of the fishing pole and the fishing boat, the fishing pole, and the fishing hook move around according to the movement of sea waves. In about 3 to 4 seconds of time passage, many fish start to swim around the sea within the screen as all the words (or sentence structures) indicated in the fish disappear. The user can view the language material to be learned and perform the task of catching the fish to tell the pronunciation of the language material to be learned("yellow" in FIG. 6). To explain in detail, the user can point each of the swimming fish scattered around here and there one by one using the fishing hook. In particular, the pronunciation of the word (or the sentence structure) hidden in the fish being pointed by the fishing hook can be heard. If the corresponding pronunciation is determined to coincide with the learning material ("yellow" in FIG. 6), the user selects the corresponding fish (a meaning of shooting). If the pronunciation of the word (or the sentence structure) hidden in the fish actually selected coincides with the learning material, the animation that the fishing pole fishes up the corresponding fish as an indication of a success (a meaning of hitting) and puts it in the fishing boat is carried out automatically. If they do not coincide with each other, no animation is carried out at all as an indication of a failure. During the progress of the game, the background music can be heard and the basic pronunciation and the quick pronunciation with respect to the first word to learn ("yellow" in FIG. 6) can be repeatedly heard. As such, the user can concentrate on the pronunciation and pay attention to whether the pronunciation of the corresponding word (or the sentence structure) coincides with the learning material. Information on an image, a motion picture, *etc.,* that helps to understand the meaning of a word (or a sentence structure) may be indicated as necessary. Once the "fitting ('fishing' in FIG. 6)" project on a single learning material is completed, the first cycle is finished. Then, the fitting ('fishing' in FIG. 6) project with respect to the next learning material is proceeded automatically. Once the project performances on all the learning materials, the hitting ratio, which is a scaled score of the actual hitting (*i.e*., fished-up) counts with respect to the "selected counts (shooting counts)", and the running time are recorded and utilized as a data for confirming the learning ability of a user.

FIG. 6 relates to a game called "hfish". As mentioned above, the learning system to which the present invention is applied provides various games in addition to the "hfish" game, for assisting users' improvement in language learning ability and the improvement in reading, listening, speaking, and writing abilities and inducing concentration and interest thereto. For example, "hblock" game is a game in which syllables and words corresponding to the pronunciations are constructed using the phoneme cards aligned as in "Lego" block game. This game helps to improve the ability to construct syllables, ability to construct words, and the ability to distinguish pronunciations linked to words. In another embodiment, the "hsound" game is a game in which a language to learn is disassembled into a syllable unit and the pronunciation cards linked to the syllables are utilized and it is a game to construct words by listening to the individual cards. The pronunciation cards are in a form of a card where the characters are not indicated therein but only the pronunciation can be heard. With this game, the users can improve the ability to distinguish and remember the pronunciations. In still another embodiment, the "hshoot" game is a game to hit the moving balloon on which the word having the same pronunciation that is being heard. With this game, the users can improve the ability to distinguish pronunciations. In addition, there are other games: the "hcard" game, which employs a method of constructing words using syllable cards after hearing the pronunciation of words; the "hboggle" game, which employs a method of eating out of syllable cards by a game character (*i.e*., referring to a character in a novel) while being similar to the "hcard" game; the "hslot" game, which employs a method of matching syllables that construct a word like a slot machine; "happle" and "hmole" games, which employ a method of finding the word after listening to a pronunciation; the "hpuzzle" game, which employs a method of combining words in horizontal and vertical directions; the "hmap" game, which employs a method of constructing words after listening to words linked to each part of the entire image; the helephant" and "htrain" games, which employ a method of constructing sentences being heard using syllable cards; "hcouple" game, which employs a method of finding a word (*e.g.,* " 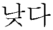 ") to make a pair of significance with the word to learn (*e.g.,* " 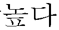 "); "hmusic" game, which employs a method of constructing the lyrics of a song by finding the corresponding syllable cards after listening to the song instead of a simple pronunciation, *etc.* All these games are similar to the "htetrism" game mentioned above, with respect to the method and exposure information. As such, the users' improvement of language learning ability can be brought in via various games from the multilateral aspects.

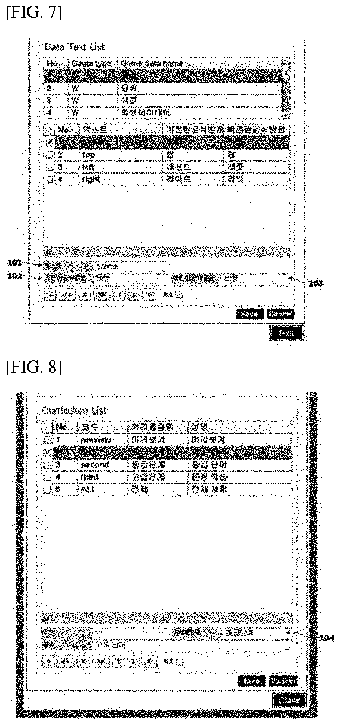

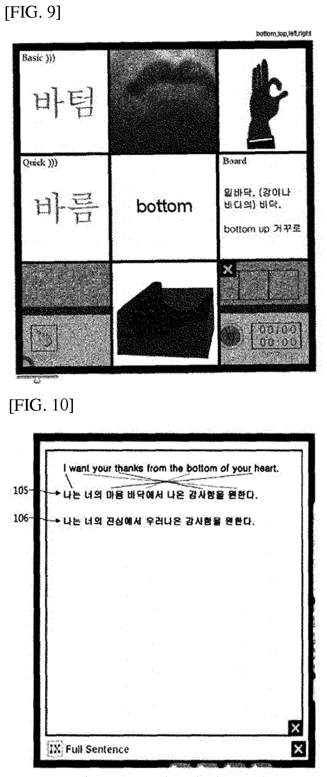

The language learning system to which the present invention is applied not only provides the users with a learning material but also a function and a guide for the users to construct the learning material and the process thereof for themselves, for the purpose of allowing them to have a positive mindset through more autonomous and active attitude and affection thereto in language learning. For example (in this embodiment, the users are Koreans and they intend to learn English), as shown in FIG. 7, this learning system enables the users directly producing information on the "text ('bottom'; 101 in FIG. 7)" corresponding to the learning material; "basic pronunciation character (' 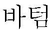 '; 102 in FIG. 7)" described in the native tongue of the users; "quick pronunciation character (' 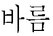 '; 103 in FIG. 7)" described in the native tongue of the users; *etc.* In particular, the directly produced learning materials are used for learning and games, as shown in FIG. 9. Additionally, as shown in FIG. 8, this learning system enables the users to directly construct the learning process (*i.e*., curriculum; 104). In particular, the thus-constructed curriculums are linked to the learning material directly produced by the users and utilized for learning and games.

For the purposes of enabling the users mentioned above to easily approach to a broader range (*i.e*., to the range of phoneme-> syllable-> word-> sentence) by proceeding with a learning from the segmented unit of a language and more easily understand the pronunciations of a language, the meanings of characters, and sentence structures, the learning system to which the present invention is applied provides the basic pronunciations and characters of a language the users intend to learn; the basic pronunciation characters described in their native tongue; quick pronunciations and characters thereof; quick pronunciation characters described in their native tongue; animations of pronunciation organs; a motion picture of a pronouncing mouth shape; motion pictures of a sign language; users' language characters relating to learning materials; images; motion pictures, basic grammar information; *etc.* For example (in this embodiment, the users are Koreans and they intend to learn English), as shown in FIG. 9, once the learning starts, first of all the users' language characters (for example, referring to " 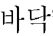 " of 'Hangeul' that corresponds to "bottom" of English which is a language the users intend to learn) are indicated for about 2 to 3 seconds. Although not shown in FIG. 9, they are indicated in the center of the screen. Then, as the corresponding characters disappear, the learning material characters ("bottom" in FIG. 9) are indicated in the positions thereon, and at the same time, the image (an image referring to "bottom" in FIG. 9) is indicated in the lower part thereof for easier understanding of the meaning. Additionally, the basic grammar information relating to the learning materials or the explanatory description for the understanding of the meaning is indicated on the right thereof. After about 1 to 4 seconds of time passage, a motion picture of a mouth shape, a motion picture of a sign language, and basic pronunciation characters described in the user's native tongue (" 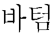 " in FIG. 9) with respect to the basic pronunciation are indicated on the upper part thereof. After about 4 times of a repetition of the basic pronunciation, quick pronunciation characters described in the user's native tongue (" 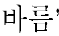 " in FIG. 9) are indicated on left thereof, and a quick pronunciation is heard about 1 to 4 seconds thereafter. After about 4 times of a repetition of the quick pronunciation, the first cycle is finished. Then, everything disappears and the second cycle with respect to the language material to learn next starts automatically. That is, the user's language characters appear in the center of the screen and then disappear; in the position thereat, learning material characters, an image on the lower part, basic grammar information or explanatory description in the right center; then, a motion picture of a mouth shape, a motion picture of a sign language, and basic pronunciation characters described in the user's native tongue with respect to the basic pronunciation on the upper part; the basic pronunciation is repeated 4 times; the quick pronunciation characters described in the user's native tongue on the left center; and the quick pronunciation is repeated 4 times. The entire cycle is sequentially and automatically connected. As such, this learning system exposes the language material to learn and various information momentarily and repeatedly with a time interval, thus enabling the users to better remember the content to learn and also stimulates the users not put a strain during the learning.

The learning system to which the present invention is applied provides the users with word order information, literal translation and liberal translation information, *etc.,* so that they can recognize the difference in the word order between the language the users intend to learn and the user's native tongue. For example (in this embodiment, the users are Korean and they intend to learn English), as shown in FIG. 10, in the sentence of "I want your thanks from the bottom of your heart.", the word order of the English is "subject + predicate + object". However, as can be seen in the sentence of " 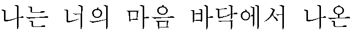 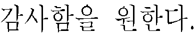 " (105), the word order of Korean language is "subject + object + predicate". To hammer home with this, as shown in FIG. 10, this learning system shows the connection of the words having the same meaning between the sentence of the language they intend to learn and the sentence of their native tongue. Additionally, if necessary, this learning system shows to the users not only the literal translation information (105) but also the liberal translation information (106).

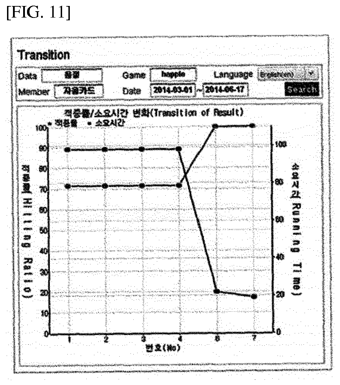

Additionally, as can be seen in FIG. 11, the learning system to which the present invention is applied visually indicates the statistical data by schematization so that the user can figure out at once the change in his learning ability through the result of the game used in the language learning and prepare for the next goal for himself. The statistical values of the scores for the hitting ratios and running time recorded during game are utilized as data for indicating graphs. These graphs allow the user to check with any improvement in his learning ability compared to the previous one, in which game and which 'Hangeul' learning the user has a deficiency, on which part the user requires to make up, *etc.*

The language learning system to which the present invention is applied as such enables people, which include those who require more thoughtful consideration with respect to language learning and general people, performing the learning contents one by one starting from a more segmented unit than a phoneme thereby allowing them to experience 'Hangeul' learning to a much broader range, and also helping them to more easily read, listen, speak, write, and understand 'Hangeul'. Additionally, the language learning system to which the present invention is applied utilizes various games in learning so that users can have concentration and interest in learning a foreign language. This language learning system provides a function and a guide for a user to construct a learning material and a process thereof for himself so that the user can get to the language learning with affection and autonomous positive attitude. This language learning system exposes numerous information momentarily and repeatedly with a time interval so that users can easily learn and better remember the pronunciations, meanings, sentence structures, *etc.,* of a language. Additionally, this language learning system provides users with a feedback through a graph based on game scores so that the users can recognize the change in their language learning ability and to be motivated for preparing a goal of language learning.

## Claims

1. A method and system for providing the minimum unit in language learning for those people who require more thoughtful consideration as well as normal people, with respect to language learning via further detailed analysis.

2. The method and system of claim 1, wherein a syllable, a word, and a sentence are constructed using phonemes, which are the minimum unit in the form of a character of a language, prepared by rotation and combination of several basic characters to be suitable for the writing order of a language.

3. The method and system of claim 1, wherein each of the phonemes constructing a syllable, which is the minimum unit of the pronunciation of a language, has a pronunciation and the pronunciation of a syllable is expressed by shortening the pronunciation interval of each phoneme.

4. A method and system for utilizing various games in language learning, wherein the games include a game of constructing a phoneme, a syllable, a word, and a sentence, and a game of finding a character, a pronunciation, and a meaning and connecting them together.

5. A method and system for not only providing a language learning material to users but also enabling the users producing a learning material and constructing a curriculum for themselves.

6. A method and system for exposing information with respect to a basic pronunciation of the language that users intend to learn and characters thereof, a basic pronunciation character described in the native tongue of the users, a quick pronunciation and characters thereof, a quick pronunciation character described in the native tongue of the users, an animation of a pronunciation organ, a motion picture of a pronouncing mouth shape, a motion picture of a sign language or the like to the users momentarily and repeatedly with a time interval to enable the users an easier learning of their language and remembering the pronunciation.

7. A method and system for exposing information with respect to users' language characters associated with a language learning material, an image, a motion picture, a basic grammar information, a word order information, a literal translation and liberal translation information or the like to the users momentarily and repeatedly with a time interval to enable the users an easier understanding of a meaning, a syntax, and a word order of a language.

8. A method and system for visually comparing language learning capability levels via schematization based on statistical data, which is the result of scores accumulated through a language learning game.
